# EUROPÄISCHE PATENTSCHRIFT

(11) **EP 4 390 117 B1**
(45) Veröffentlichungstag und Bekanntmachung des Hinweises auf die Patenterteilung: **02.12.2026**
(21) Anmeldenummer: 22214546.8
(22) Anmeldetag: 19.12.2022
(51) Int. Cl.: F03D 13/10, B66C 1/10

(54) **HEBEMITTEL ZUM HEBEN EINER KOMPONENTE EINER WINDENERGIEANLAGE**
LIFTING MEANS FOR LIFTING A COMPONENT OF A WIND TURBINE
MOYEN DE LEVAGE POUR LEVER UN COMPOSANT D'UNE ÉOLIENNE

(43) Veröffentlichungstag der Anmeldung: 26.06.2024
(73) Patentinhaber: Wobben Properties GmbH, 26607 Aurich (DE)
(72) Erfinder: Migas, Szymon, 45-234 OPOLE (PL); Ressel, Dirk, 26605 Aurich (DE); Rösingh, Burkhard, 26844 Jemgum (DE); Beckmann, Sascha, 26802 Veenhusen (DE); Janssen, Udo, 26629 Grossefehn (DE)
(74) Vertreter: Eisenführ Speiser

(56) Entgegenhaltungen:
- WO-A1-2014/154220
- WO-A2-2011/131254
- US-A1- 2011 194 896
- US-B2- 7 210 882
- US-B2- 8 596 700
- US-B2- 8 678 455

## Beschreibung

Die Erfindung betrifft ein Hebemittel zum Heben einer Komponente einer Windenergieanlage.

Für den Bau von Windenergieanlagen müssen die Komponenten der Windenergieanlagen transportiert und angehoben werden. Insbesondere der Turm der Windenergieanlage besteht aus mehreren Segmenten, die mit Hebemitteln angehoben und montiert werden.

Das Hebemittel kann in einer bestimmten Position durch Schraubverbindungen an den Flanschen am Turmsegment befestigt werden. In dem Hebemittel sind dazu die Löcher für die Schraubverbindung so angeordnet, dass sie einem Abstand der Löcher in den Flanschen des Turmsegments entsprechen.

Dabei ist problematisch, dass ein solches Hebemittel nur für eine ganz bestimmte Komponente der Windenergieanlage eingesetzt werden kann. Eine Komponente mit einem leicht abweichenden Abstand der Löcher oder einem anderen Durchmesser und einer damit verbundenen abweichenden Anordnung der Löcher ließe sich mit diesem Hebemittel nicht verbinden.

Ein weiteres Problem üblicher Hebemittel liegt darin, dass durch das Gewicht des anzuhebenden Turmsegments enorme Kräfte auf das Hebemittel wirken. Wenn das Hebemittel nicht richtig montiert ist, kann sich die Verbindungsschraube während des Aufrichtens vertikal und/oder horizontal im Loch verschieben.

Es ist daher sicherzustellen, dass das Hebemittel sicher befestigt ist. Dazu müssen beim Befestigen des Hebemittels sehr hohe Drehmomente aufgebracht werden bis ca. 1700 Nm.

EP 2 035 316 B1 zeigt ein Hebemittel mit einem exzentrisch einstellbaren Befestigungspunkt. Damit lässt sich das Hebemittel an unterschiedliche Geometrien der zu hebenden Komponenten anpassen. Das Hebemittel weist jedoch eine komplizierte Form auf.

WO 2014/154220 A1 zeigt ein Hebemittel zum Anheben einer Komponente einer Windenergieanlage mit einem Hauptkörper und einer Bodenplatteneinheit.

US 2011/194896 A1 zeigt ein Hebemittel zum Anheben einer Komponente einer Windenergieanlage.

US 8,678,455 B2 zeigt ein Hebemittel zum Anheben einer Komponente einer Windenergieanlage.

US 8,596,700 B2 zeigt ein Hebemittel zum Anheben einer Komponente einer Windenergieanlage.

Aufgabe der Erfindung ist es, eines der beschriebenen Probleme zu lösen. Insbesondere soll ein Hebemittel vorgeschlagen werden, dass im Vergleich zum Stand der Technik ein Anbringen mit geringerem Drehmoment erlaubt. Zumindest soll eine Alternative vorgeschlagen werden. Insbesondere ein vereinfachtes Hebemittel, das sich an verschiedene Komponenten von Windenergieanlagen anpassen lässt.

Diese Aufgabe wird durch ein Windenergieanlagen-Komponenten-Hebemittel gelöst.

Somit wird ein Windenergieanlagen-Komponenten-Hebemittel zum Anheben einer Komponente einer Windenergieanlage vorgesehen. Das Hebemittel weist einen Hauptkörper mit einem ersten und zweiten Ende sowie jeweils einem ersten Befestigungsabschnitt zur Aufnahme von Schrauben im Bereich des ersten und zweiten Endes auf. Der erste Befestigungsabschnitt weist ein Langloch entlang einer Längsrichtung des Hauptkörpers auf.

Ferner ist eine Bodenplatteneinheit vorgesehen, welche eine Bodenplatte mit einer Bohrung zur Aufnahme mindestens einer Schraube aufweist, wobei die Bohrung quer zur Längsrichtung bewegbar ist.

Die Bodenplatteneinheit weist zwei Halter auf, wobei die Bodenplatte mittels der zwei Halter an dem Hauptkörper befestigbar ist. Die Bodenplatte kann mittels Schrauben oder Gewindestangen zwischen den beiden Haltern bewegbar ausgestaltet sein.

Gemäß einem weiteren Aspekt der vorliegenden Erfindung weist das Hebemittel einen Anhebebereich zwischen dem ersten und zweiten Ende des Hauptkörpers auf. In oder an dem Anhebebereich kann eine Hülse vorgesehen sein, welcher zur Aufnahme eines Seils oder einer Rundschlinge zum Anheben des Hebemittels vorgesehen ist.

Gemäß einem weiteren Aspekt der vorliegenden Erfindung kann die Hülse zweiteilig ausgestaltet sein und jeweils ein erstes und zweites Ende sowie einen mittleren Abschnitt aufweisen. Der mittlere Abschnitt kann zylinderförmig oder halbzylinderförmig ausgestaltet sein.

In dieser Anmeldung sind unbestimmte Artikel als nicht abschießend zu verstehen. Mit einem ersten und einem zweiten Befestigungsabschnitt sind also z.B. stets wenigstens ein erster und wenigstens ein zweiter Befestigungsabschnitt gemeint.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage,
- Fig. 2: zeigt eine Explosionsdarstellung eines Hebemittels zum Heben von Komponenten einer Windenergieanlage,
- Fig. 3: zeigt eine weitere Explosionsdarstellung eines Hebemittels zum Heben einer Komponente einer Windenergieanlage,
- Fig. 4: zeigt eine perspektivische Schnittansicht eines Hebemittels,
- Fig. 5: zeigt eine weitere perspektivische Schnittansicht eines Hebemittels,
- Fig. 6: zeigt eine Draufsicht auf ein Hebemittel zum Heben von Komponenten einer Windenergieanlage,
- Fig. 7: zeigt eine perspektivische Ansicht eines Hebemittels zum Heben von Komponenten einer Windenergieanlage,
- Fig. 8: zeigt eine Draufsicht auf eine Unterseite eines Hebemittels zum Heben von Komponenten einer Windenergieanlage,
- Fig. 9: zeigt eine schematische Darstellung eines Turmsegments mit zwei Hebemitteln,
- Fig. 10: zeigt eine schematische Darstellung eines Turmsegmentes mit zwei Hebemitteln,
- Fig. 11: zeigt ein Hebemittel aus dem Stand der Technik,
- Fig. 12 - 20: zeigen verschiedene Ausführungsformen des erfindungsgemäßen Hebemittels,
- Fig. 21: zeigt zwei montierte Hebemittel an einem Turmsegment einer Windenergieanlage,
- Fig. 22: zeigt Belastungsrichtungen auf das Hebemittel, und
- Fig. 23: zeigt die Kraftwirkung auf das keilförmige Befestigungselement.

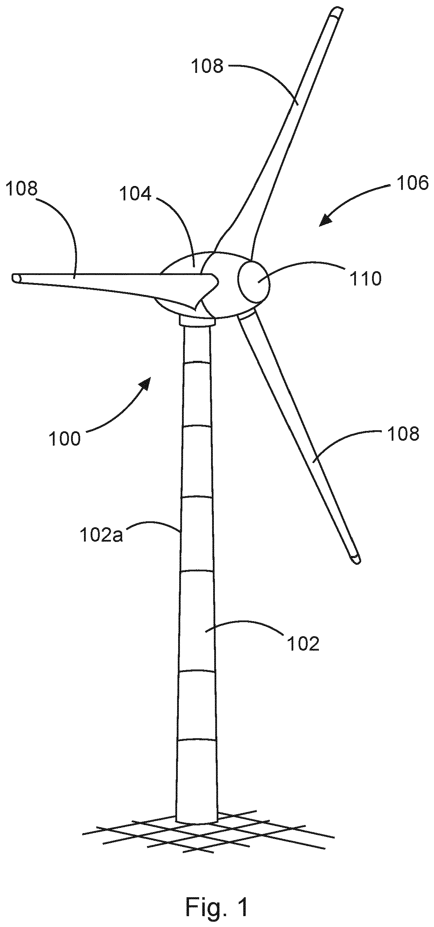

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden. Der Turm 102 weist eine Mehrzahl von Turmsegmenten 102a auf. Diese Turmsegmente werden während der Montage des Rotors der Windenergieanlage aufeinander platziert, um den Turm 102 auszubilden.

Wenn der Turm konisch ausgestaltet ist, dann bedeutet dies, dass Turmsegmente mit unterschiedlichem Durchmesser vorhanden sind. Dies führt u. a. dazu, dass auch der Abstand zwischen Löchern in einem Flansch des Turmsegmentes auch von der Größe des Turmsegmentes abhängt. Mit anderen Worten, die Löcher in den Flanschen eines unteren Turmsegmentes können weiter auseinander liegen als Löcher in einem Flansch eines oberen Turmsegmentes.

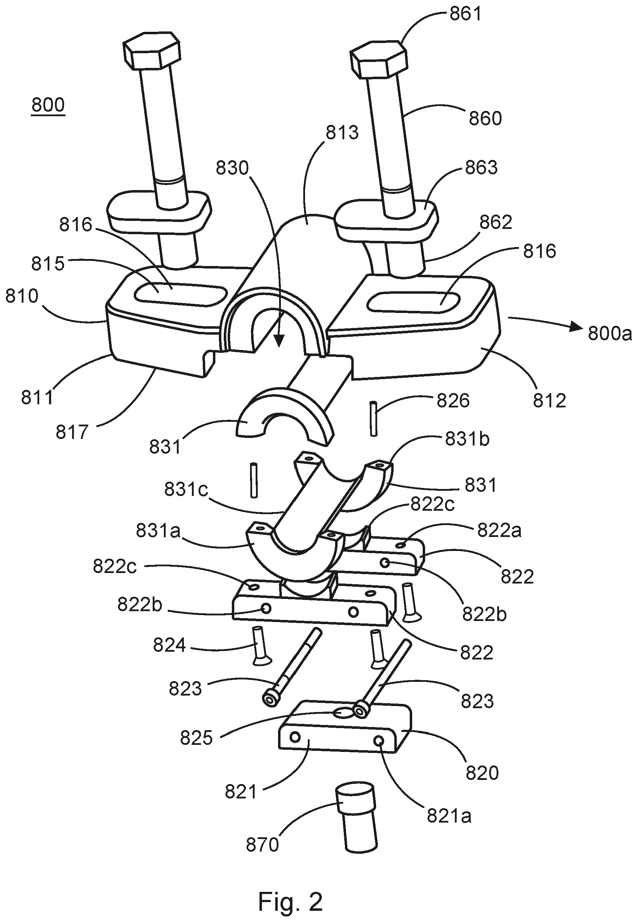

Fig. 2 zeigt eine Explosionsdarstellung eines Hebemittels zum Heben von Komponenten einer Windenergieanlage. Ein Hebemittel 800 wird vorgesehen, um mittels des Hebemittels beispielsweise ein Turmsegment einer Windenergieanlage unter Zuhilfenahme eines Krans anheben zu können. Das Hebemittel wird dabei an einem Turmsegment, insbesondere an einem Flansch des Turmsegmentes, befestigt und an der gegenüberliegenden Seite des Hebemittels kann ein Seil oder eine Rundschlinge befestigt werden, um das Turmsegment mittels eines Krans anheben zu können.

Das Hebemittel 800 weist einen Hauptkörper 810 mit einem ersten und zweiten Ende 811, 812 und einem mittleren Abschnitt 813 sowie einer Längsrichtung 800a auf. Im Bereich des ersten und zweiten Endes 811, 812 ist jeweils ein Befestigungselement 815 vorgesehen. Dieses Befestigungselement dient dazu, das Hebemittel 800 mit einer Komponente einer Windenergieanlage z. B. mittels Schrauben 860 verbinden zu können. Das Befestigungselement 815 kann beispielsweise ein Langloch 816 oder einen Schlitz in Längsrichtung 800a aufweisen. Durch die Ausgestaltung als Langloch kann das Hebemittel 800 in Längsrichtung bewegt werden bzw. die Positionen der Schrauben 860 können variiert werden. Der Hauptkörper 810 weist ferner eine untere Seite oder einen Boden 817 auf. Im Bereich des mittleren Abschnitts 813 ist ein Anhebebereich 830 vorgesehen, welcher dazu dient, ein Seil oder eine Rundschlinge aufzunehmen.

Optional ist eine Hülse 831 im Anhebebereich 830 vorgesehen. Die Hülse 831 kann zweistückig ausgestaltet sein. Jeder Teil der Hülse weist ein erstes Ende 831a, ein zweites Ende 831b und einen mittleren Abschnitt 831c auf. Der mittlere Abschnitt 831c kann im Wesentlichen zylinderförmig oder halbzylinderförmig ausgestaltet sein. Das erste und zweite Ende 831a, 831b können jeweils einen Kragen aufweisen. Im Inneren des Kragens kann ein Übergang zwischen dem Kragenbereich und dem mittleren Bereich vorgesehen sein, welcher keine scharfen Kanten aufweist. Durch die Ausgestaltung des Kragens kann vermieden werden, dass ein Kabel oder eine Rundschlinge, welche durch die Hülse durchgeführt wird, um das Hebemittel anheben zu können, beschädigt wird.

Optional kann auch auf die Kabelhülse 831 verzichtet werden, so dass das Seil bzw. die Rundschlinge unmittelbar in dem Anhebebereich 830 vorgesehen sein kann. Der Anhebebereich 830 erstreckt sich im Wesentlichen im mittleren Abschnitt 813 und quer zur Längsrichtung. Optional ist der Anhebebereich 830 als eine hohlzylindrische oder halbhohlzylindrische Ausnehmung in dem Hauptkörper 810 vorgesehen. Die Ausrichtung dieser Ausnehmung kann senkrecht zu der Längsrichtung der Langlöcher 816 ausgestaltet sein.

Das Hebemittel 800 weist ferner eine Bodenplatteneinheit 820 auf. Die Bodenplatteneinheit 820 weist eine Bodenplatte 821 mit einer Bohrung 825 auf, welche dazu dient, eine Schraube oder einen eingeschraubten Zapfen 870 zur Befestigung und/oder zur Positionierung des Hebemittels 800 in oder an der Komponente der Windenergieanlage aufzunehmen.

Die Schraube 870 kann ihre Position quer zur Längsrichtung ändern. Hierzu kann die Bodenplatte verschiebbar sein oder die Schraube kann in einem Langloch quer zur Längsrichtung verschoben werden. Die Schraube kann auch als Bolzen oder Stange ausgestaltet sein.

Bei einem Konzept mit zwei Keilen müssen diese verschraubt werden (am Ende wird der Anschlagpunkt mit drei Bolzen am Flansch befestigt), beim Konzept mit einer Stellschraube muss in der Mitte nicht verschraubt werden. Lediglich eine Stange (austauschbare Stange je nach Lochgröße) ist notwendig.

Die Bodenplatte 821 weist zwei weitere Bohrungen 821 auf, welche sich zwischen den Stirnseiten der Bodenplatte 820 und somit optional senkrecht zur Bohrung 825 erstrecken. Die Bodenplatteneinheit 820 weist ferner zwei Halter 822 auf, welche jeweils an ihren Stirnseiten zwei Bohrungen 822b aufweisen. Ferner weisen die Halter 822 zwei weitere Bohrungen 822c auf. Des Weiteren weisen die Halter 822 im mittleren Bereich jeweils einen Vorsprung auf, der dazu dient, die Hülse oder einen Teil der Hülse 831 aufzunehmen und zu halten. Die beiden Halter 822 können mittels Schrauben 824 an der Unterseite 817 des Hauptkörpers 810 verschraubt werden. Die Schrauben, insbesondere die Gewindeschrauben 823, werden dazu verwendet, die Bodenplatte 821 zwischen den beiden Haltern 822 zu verschrauben. Durch Betätigung der Gewindeschrauben 823 kann die Position der Bodenplatte 821 zwischen den beiden Haltern 822 variiert werden. Damit kann eine Variation der Position der Bohrung 825 in Längsrichtung der Hülse 831 erreicht werden. Ferner kann optional die Position der Bodenplatte 820 und damit der Bohrung 825 senkrecht zur Längsrichtung der Langlöcher 816 verändert werden. Optional können zwei Schrauben vorgesehen sein, um die Platte 820 in Position zu halten. Lediglich eine davon benötigt ein Gewinde. Die zweite Schraube kann als Führung dienen. Dies ist vorteilhaft, da es nicht notwendig ist, ein Justieren mit zwei Schrauben durchzuführen. Die Schrauben 823 können auch als Führungsstange oder Bolzen ausgestaltet sein, welche von Hand justierbar sind.

Das erfindungsgemäße Hebemittel kann sich somit an unterschiedliche Abstände zwischen Bohrungen eines Flansches eines Turmsegments in Längsrichtung des Hauptkörpers oder quer zur Längsrichtung 800a anpassen.

In den Langlöchern 816 können Schrauben 860 mit einem ersten und zweiten Ende 861, 862 und einer Unterlegscheibe 863 vorgesehen sein. Hierbei werden die zweiten Enden 862 in die Langlöcher 816 platziert. Das erste Ende 861 kann beispielsweise als Schraubenkopf ausgestaltet sein. Die zweiten Enden 862 sind somit durch die Langlöcher und Bohrungen in einem Turmflansch geführt und können mittels einer Schraube befestigt werden. Durch die Ausgestaltung der ersten Befestigungsabschnitte 815 als Langlöcher können die durch die Langlöcher geführten Schrauben 860 einen unterschiedlichen Abstand zueinander aufweisen, so dass sie an die Abstände der Durchgangsbohrungen von Turmflanschen von Turmsegmenten angepasst werden können.

Zusätzlich dazu kann durch die verschiebbare Bodenplatte 820 sowie die Durchgangsbohrung 825 in der Bodenplatte 821, in welche eine Schraube oder eine Gewindestange eingeführt wird, die Position dieser Gewindestange relativ zu der Position der Langlöcher eingestellt werden. Die Gewindestange oder die Schraube oder der Zapfen 870 kann optional in oder an der Durchgangsbohrung 825 beispielsweise mittels einer Mutter befestigt werden. Alternative dazu kann die Durchgangsbohrung 825 ein Gewinde aufweisen, in das unterschiedliche Zapfen eingeschraubt werden, die dem jeweiligen Durchmesser der Bohrung im Turmflansch angepasst sind.

Das andere Ende, welches durch Durchgangsbohrungen an den Turmflanschen der Turmsegmente hindurchgeführt ist, kann ebenfalls beispielsweise mittels einer Mutter befestigt werden.

Somit wird ein Hebemittel 800 erhalten, welches in zwei Richtungen (in Längsrichtung und quer zur Längsrichtung) an unterschiedliche Abstände zwischen Durchgangsbohrungen in einem Turmflansch eines Turmsegmentes angepasst werden kann.

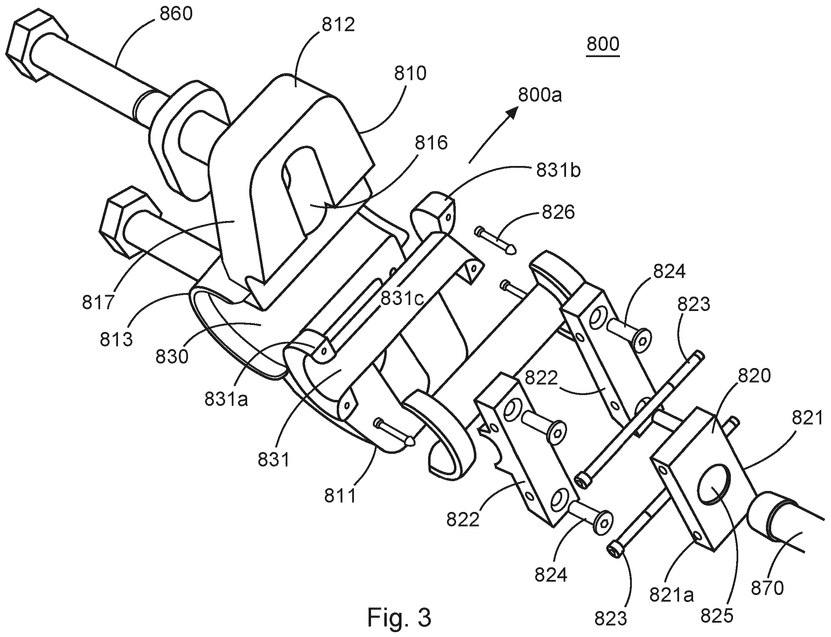

Fig. 3 zeigt eine weitere Explosionsdarstellung eines Hebemittels zum Heben einer Komponente einer Windenergieanlage. In Fig. 3 ist eine perspektivische Explosionsdarstellung des Hebemittels 800 dargestellt. Das Hebemittel 800 weist einen Hauptkörper 810 mit einem ersten und zweiten Ende 811, 812 sowie einen mittleren Abschnitt 813 und eine Längsrichtung 800a auf. An dem ersten und zweiten Ende 811, 812 ist jeweils ein Befestigungsabschnitt 815 beispielsweise in Form eines Langloches 816 oder eines Schlitzes (in Längsrichtung 800a) vorgesehen. Im Bereich des mittleren Abschnitts 813 kann ein Anhebebereich 830 vorgesehen sein. Optional kann eine Hülse 831 in dem Anhebebereich 830 platziert sein. Die Hülse 831 kann zweiteilig ausgestaltet sein. Die Hülsen 831 können ein erstes und zweites Ende 831a, 831b sowie einen mittleren Abschnitt 831c aufweisen. Die Hülsen 831 dienen dazu, ein Seil, ein Kabel oder ein Rundschlingengelenk, welches zum Anheben des Hebemittels verwendet wird, aufzunehmen.

Ferner weist das Hebemittel 800 eine Bodenplatteneinheit 820 mit einer Bodenplatte 821 auf. Die Bodenplatte 821 weist mittig eine Durchgangsbohrung 825 zur Aufnahme einer Schraube 870 auf. Die Bodenplatte 821 weist ferner weitere Löcher 821a auf. Des Weiteren weist die Bodenplatteneinheit 800 zwei Halter 822 auf. Mittels Schrauben, Führungsstangen oder Gewindestangen 823 kann die Bodenplatte 821 zwischen den Haltern 822 hin und her bewegt werden, so dass sich damit auch die Position der Durchgangsbohrung 825 ändert.

Durch die Ausgestaltung der Befestigungseinheit in Form von Langlöchern sowie durch die Bodenplatteneinheit, welche es erlaubt, die Bodenplatte 821 zwischen den Haltern 822 zu bewegen, kann das Hebemittel an unterschiedliche Abstände von Durchgangsbohrungen von Turmflanschen eines Turmsegmentes angepasst werden.

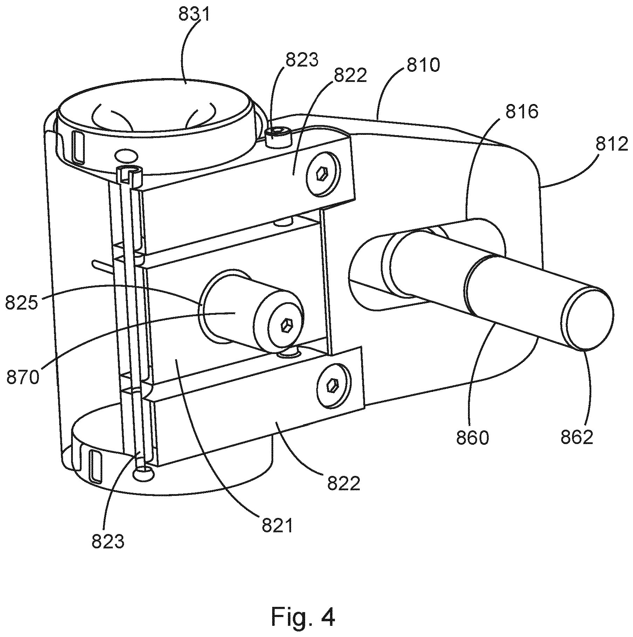

Fig. 4 zeigt eine perspektivische Schnittansicht eines Hebemittels beispielsweise von Fig. 2 oder 3. In Fig. 4 ist der Hauptkörper 810 des Hebemittels 800 mit seinem zweiten Ende 812 mit einem Langloch 816 gezeigt. In dem Langloch 816 kann eine Schraube 860 platziert werden und entlang der Länge des Langloches 816 hin und her verschoben werden. Ferner ist die Hülse 831 und die Bodenplatteneinheit 820 mit der Bodenplatte 821 und den Haltern 822 vorgesehen. Die Bodenplatte 821 kann mittels der Gewindeschrauben oder Stangen 823 entlang der Gewindestangen hin und her bewegt werden. Damit kann eine Schraube 870, welche in der Durchgangsbohrung 825 in der Bodenplatte 821 platziert ist, hin und her bewegt werden. Die Bewegung der Schraube 870 kann dabei im Wesentlichen senkrecht sein zu einer Schraube 860, welche entlang des Langloches 816 bewegt wird.

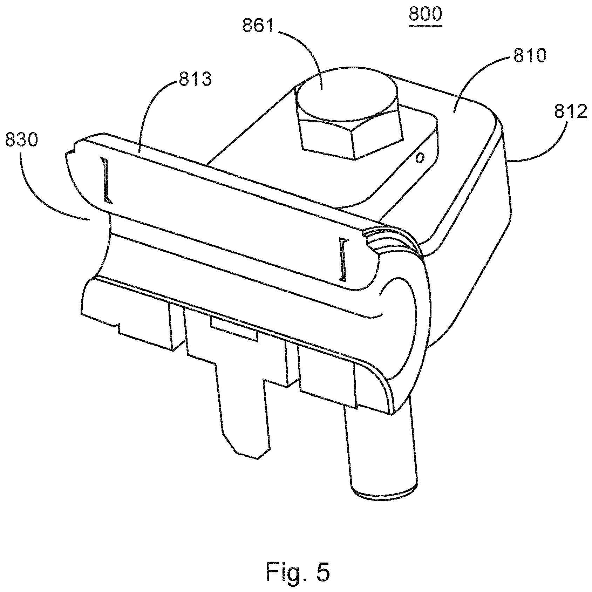

Fig. 5 zeigt eine weitere perspektivische Schnittansicht eines Hebemittels.

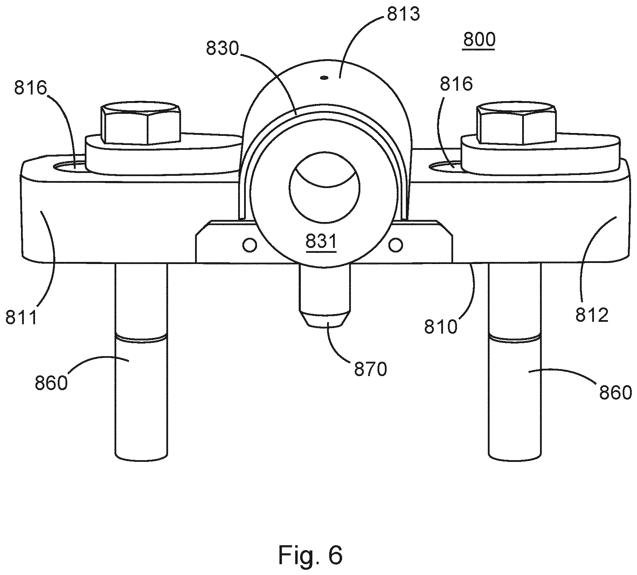

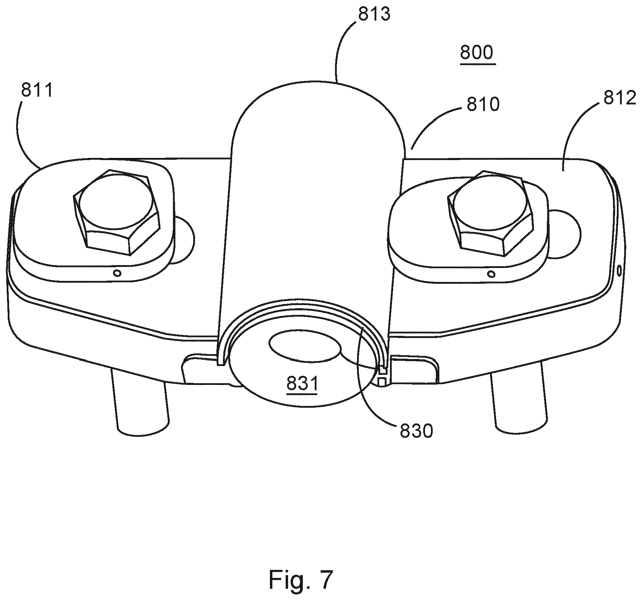

Fig. 6 und 7 zeigen jeweils eine perspektivische Ansicht eines Hebemittels. Das Hebemittel 800 weist einen Hauptkörper 810 mit einem ersten und zweiten Ende 811, 812 auf, welcher jeweils einen Befestigungsabschnitt 815 aufweist. Die Befestigungsabschnitt 815 weisen jeweils ein Langloch 816 zur Aufnahme von Befestigungsschrauben auf. In einem mittleren Abschnitt 813 zwischen dem ersten und zweiten Ende 811, 812 des Hauptkörpers 810 ist ein Anhebebereich vorgesehen. In diesem Anhebebereich 830 kann eine Hülse 831 vorgesehen sein.

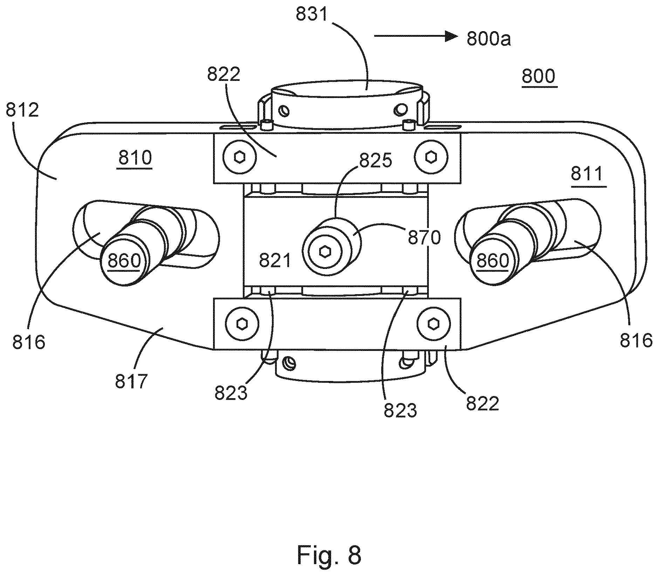

Fig. 8 zeigt eine Draufsicht auf eine Unterseite eines Hebemittels zum Heben von Komponenten einer Windenergieanlage. In Fig. 8 ist das Hebemittel 800 mit einem Hauptkörper 810 mit einem ersten und zweiten Ende 811, 812 und einem mittleren Abschnitt 813 sowie einer Längsrichtung 800a gezeigt. Am ersten und zweiten Ende 811, 812 ist jeweils ein Langloch 816 vorgesehen, welche zur Aufnahme der Schrauben 860 dienen. In einem Anhebebereich 830, insbesondere am Boden 817 des Hauptkörpers, sind zwei Halter 822 sowie eine Bodenplatte 821 zwischen den Haltern vorgesehen. Die Halter und die Bodenplatte sind über Gewindestangen oder Führungsstangen 823 miteinander so verbunden, dass durch Betätigung der Gewindestangen die Bodenplatte 821 entlang der Gewindestangen bewegbar ist. Die Bodenplatte 821 weist eine Durchgangsbohrung 825 auf, welche dazu dient, eine Schraube 870 aufzunehmen.

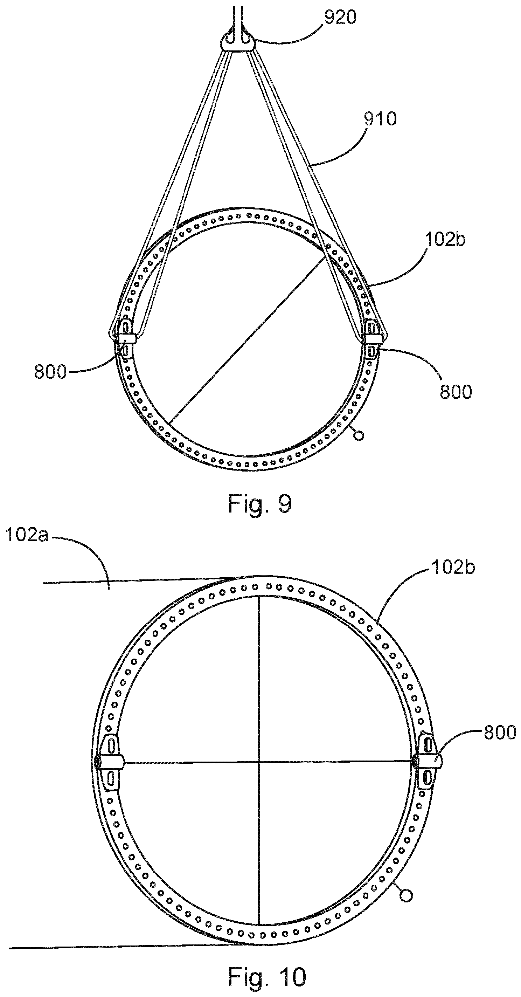

Fig. 9 zeigt eine schematische Darstellung eines Turmflansches 102b, welcher an einem Turmsegment 102a befestigt werden kann. Zwei Hebemittel 800 können mittels entsprechender Schrauben in den Durchgangsbohrungen des Flansches 102b befestigt werden. Mittels Seilen, Ketten oder Rundschlingen 910 kann ein Kranhaken 920 mit dem Flansch verbunden sein. Somit kann der Flansch mit Hilfe der Hebemittel angehoben werden.

In Fig. 10 ist ein montierter Flansch 102b gezeigt. Zwei Hebemittel 800 können an dem Flansch 102b befestigt werden und können dazu dienen, das Turmsegment 102a anzuheben.

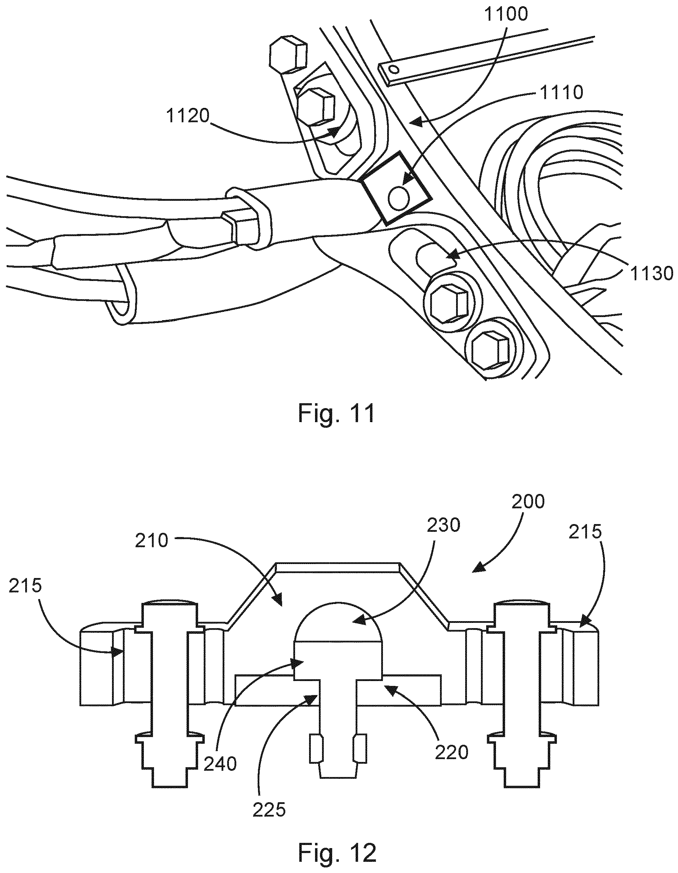

Fig. 11 zeigt ein Hebemittel 1100 aus dem Stand der Technik. Das Hebemittel hat einen Anhebebereich 1110, also eine Öffnung, zum Befestigen eines Seils für das Anheben mit einem Kran. Ebenso hat es einen Befestigungsbereich 1120, 1130 mit einem Schlitz 1120 und einem Schlitz 1130, durch die das Hebemittel 1100 über Schrauben mit einem Turmsegment einer Windenergieanlage verbunden wird.

Zum Anbringen des Hebemittels 1100 sind jedoch enorme Drehmomente von ca. 1700 Nm erforderlich, damit das Hebemittel sicher befestigt ist.

Fig. 12 zeigt einen Längsschnitt durch ein Hebemittel. Das Hebemittel 200 weist einen Hauptkörper 210, eine Bodenplatte 220 und einen Anhebebereich 230 auf. Der Hauptkörper 210 weist einen ersten Befestigungsabschnitt 215 mit zwei Schlitzen oder Langlöchern auf, über die das Hebemittel 200 mit Schrauben an einer Komponente der Windenergieanlage befestigt werden kann. Weiterhin weist die Bodenplatte 220 des Hebemittels 200 einen zweiten Befestigungsbereich 225 auf sowie ein keilförmiges Befestigungselement 240.

Der Hauptkörper 210 weist eine Ausnehmung zur Aufnahme der Bodenplatte 220 auf. Das Befestigungselement 240 kann oberhalb der Bodenplatte 220 und im Bereich des Anhebebereichs 230 vorgesehen sein.

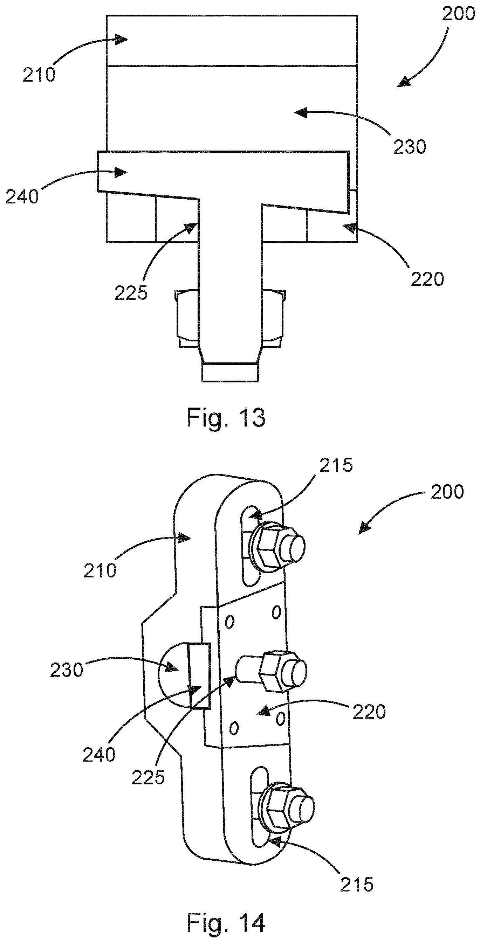

Fig. 13 zeigt einen Querschnitt des Hebemittels von Fig. 2. Das Hebemittel 200 weist einen Hauptkörper210, eine Bodenplatte 220 und einen Anhebebereich 230 auf. Die Bodenplatte 220 ist im unteren Bereich des Hauptkörpers 210 in einer Ausnehmung 211 in dem Hauptkörper 210 vorgesehen. Zwischen dem Anhebebereich 230 und der Bodenplatte 220 ist ein Befestigungselement 240 vorgesehen, welches ein oberes keilförmiges Ende aufweist.

Fig. 14 zeigt eine perspektivische Ansicht des Hebemittels von Fig. 12. Sowohl das Befestigungselement 240 als auch die Bodenplatte 220 können keilförmig oder trapezförmig ausgestaltet sein. Die Ausnehmung 211 in dem Hauptkörper, welche zur Aufnahme der Bodenplatte 220 vorgesehen ist, kann trapezförmig oder keilförmig ausgestaltet sein, so dass eine trapezförmig oder keilförmig ausgestaltete Bodenplatte eingesetzt werden kann. Hierbei kann die Bodenplatte 220 in ihrer Längsausrichtung keilförmig oder trapezförmig ausgestaltet sein.

Dieser Querschnitt erlaubt eine bessere Ansicht des keilförmigen Befestigungselements 240.

Die Bodenplatte 220 ist auswechselbar und mit vier Schrauben an der zur Komponente gerichteten Unterseite des Hebemittels 200 angeschraubt. Dadurch lässt sich das Befestigungselement 240 leicht einsetzen, bevor die Bodenplatte 220 am Hauptkörper 210 angeschraubt wird.

Die trapezförmige Bodenplatte 220 sitzt in einer im gleichen Maße trapezförmig geformten Aussparung im Hauptkörper 210. Das Hebemittel wird so an der Komponente der Windenergieanlage angebracht, dass die Belastung in Richtung der Verjüngung der Bodenplatte 220 gerichtet ist. Bei Belastung wird dadurch der Anpressdruck erhöht.

Ebenso ist das Befestigungselement 240 keilförmig geformt und das Hebemittel 200 so ausgerichtet, dass die Verjüngung entgegen einer Richtung der Belastung ausgerichtet wird. In Fig. 14 verjüngt sich das Befestigungselement 240 also zur rückläufigen Seite hin. Bei Belastung auf das Hebemittel 200 erhöht sich somit der Anpressdruck zwischen Hebemittel 200 und Komponente der Windenergieanlage.

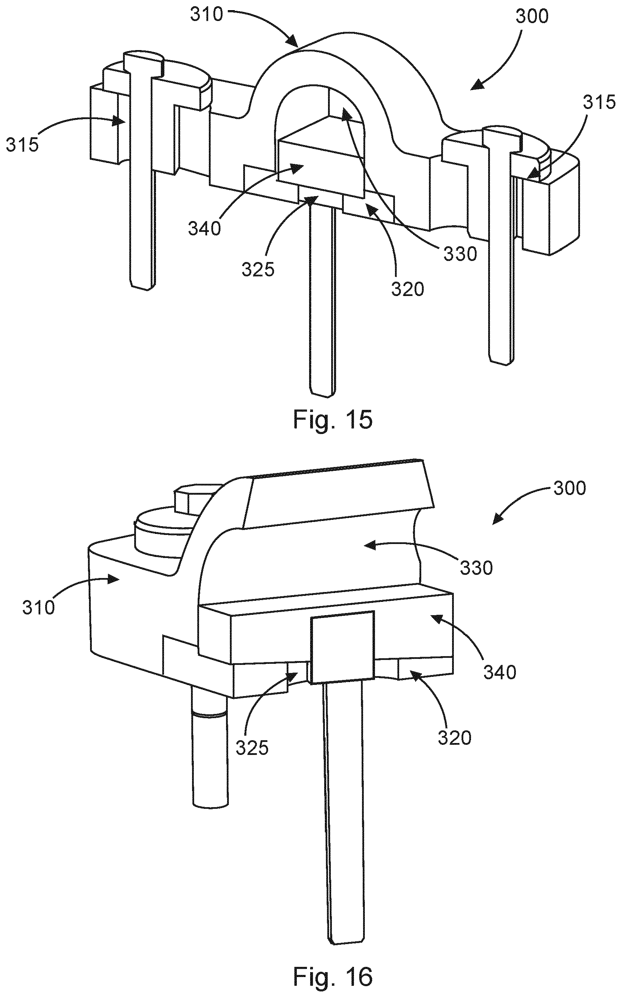

Fig. 15 zeigt einen Längsschnitt durch eine weitere Ausführungsform eines erfindungsgemäßen Hebemittels 300 mit Hauptkörper 310 und Bodenplatte 320. Der Hauptkörper weist einen ersten Befestigungsbereich 315 mit zwei Schlitzen auf. Die Bodenplatte weist einen zweiten Befestigungsbereich 325 mit einem Schlitz auf.

Fig. 16 zeigt einen weiteren Schnitt durch das Hebemittels 300 aus Fig. 15. In Fig. 16 ist zu sehen, dass das Befestigungselement 340 keilförmig ist. Die Bodenplatte 320 ist in gleichem Maße keilförmig ausgeführt. Die verbindende Schraube liegt somit wieder auf einer planen Fläche auf.

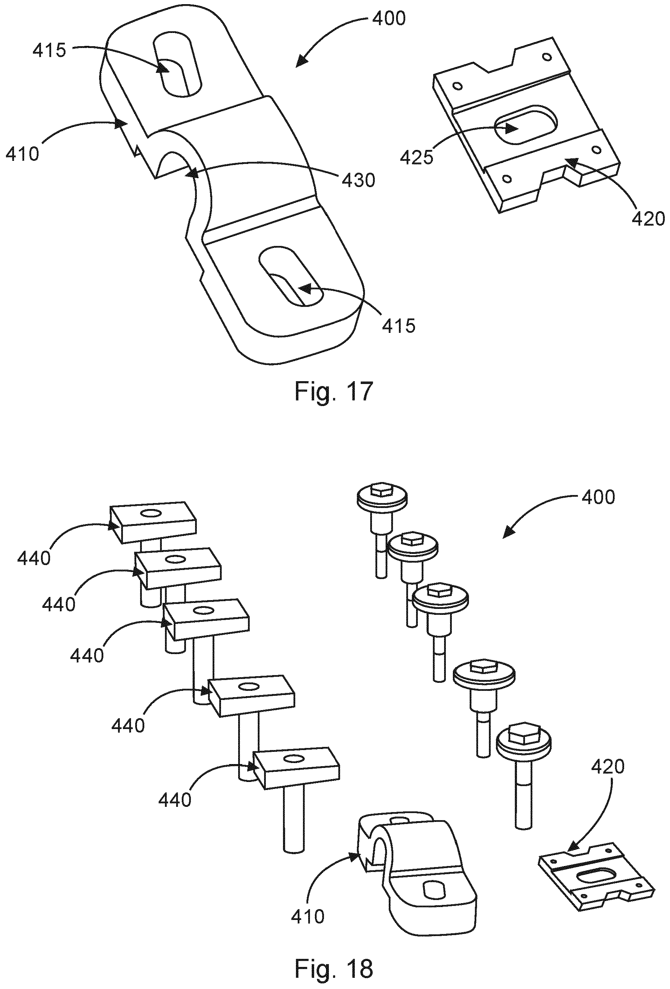

Fig. 17 zeigt eine weitere Ausführungsform eines erfindungsgemäßen Hebemittels 400. Hauptkörper 410 und Bodenplatte 420 sind dabei im unverbundenen Zustand gezeigt. Für die Montage wird die Bodenplatte 420 auf der Unterseite, also der Komponente der Windenergieanlage zugewandte Seite, des Hauptkörpers 410 angeschraubt. Die Bodenplatte ist dann mittig im Hebemittel 400 angeordnet unterhalb des Anhebebereichs 430.

Die zwei Schlitze 415a eines ersten Befestigungsabschnitts 415 im Hauptkörper 410 sind annähernd rechtwinklig zum Schlitz 425a eines zweiten Befestigungsabschnitts 425 in der Bodenplatte 420 angeordnet. Die Anordnung der Schlitze 415a, 425a im ersten und zweiten Befestigungsabschnitt 415, 425 sperren sich somit gegenseitig. Horizontales und/oder vertikales Verschieben des Hebemittels beim Anheben der Komponente wird dadurch verhindert.

Weiterhin können die zwei Schlitze 415a des ersten Befestigungsabschnitts 415 nicht parallel ausgerichtet sein. Das hat den Vorteil, dass sich das Hebemittel 400 leicht an verschiedene Umfänge von Windenergieanlagenkomponenten anpassen lässt.

Die Bodenplatte 420 kann abschnittsweise keilförmig ausgeführt sein. Sie bildet das Gegenstück für ein keilförmiges Befestigungselement 440. Unter Belastung ziehen sich das keilförmige Befestigungselement 440 und die Bodenplatte 420 fester zusammen. Bei der Montage ist dadurch nur ein geringes Anziehmoment nötig.

Fig. 18 zeigt eine weitere Ansicht des Hebemittels 400 aus Figur 17. Dabei sind zusätzlich mehrere austauschbare Befestigungselemente 440 gezeigt sowie zugehörige Schrauben.

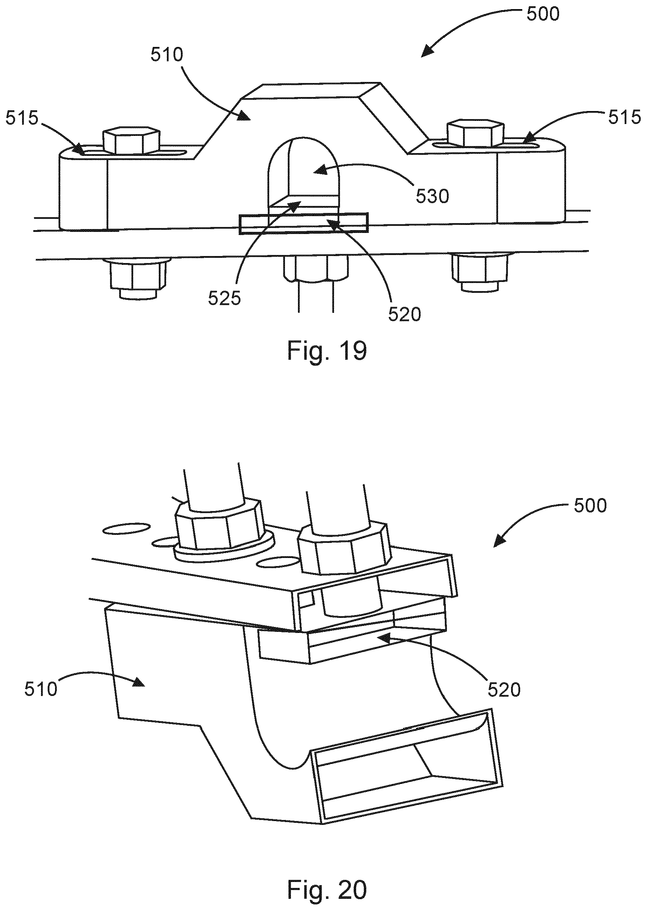

Fig. 19 zeigt eine weitere Ausführungsform eines erfindungsgemäßen Hebemittels 500. Ein Hauptkörper 510 weist dabei einen ersten Befestigungsabschnitt 515 auf, ausgebildet als zwei Schlitze 515a, durch die Schrauben geführt werden, um den Hauptkörper 510 mit der Komponente der Windenergieanlage zu verbinden.

Der Hauptkörper 510 weist einen Anhebebereich 530 auf, durch welchen ein Seil geführt werden kann, an dem das Hebemittel mit einem Kran angehoben werden kann.

Weiterhin weist das Hebemittel 500 eine Bodenplatte 520 auf, die mittig im Hebemittel 500 angeordnet ist. Mit einer Schraube wird die Bodenplatte 520 mit einer Schraube mit der Komponente der Windenergieanlage verbunden.

Die keilförmige Form der Bodenplatte 520 ist durch ein Viereck angedeutet, das die rückwärtige, abgeflachte Seite der Bodenplatte 520 veranschaulicht.

Fig. 20 zeigt einen Schnitt durch das Hebemittel 500 der Fig. 19, in dem die keilförmige Bodenplatte 520 angedeutet ist. Hierbei kann einerseits die Bodenplatte 520 selbst das keilförmige Befestigungselement darstellen. In diesem Fall zieht sich unter Belastung die Bodenplatte selbst zwischen dem Hauptkörper 510 und der Komponente der Windenergieanlage fest. Andererseits kann zusätzlich ein keilförmiges Befestigungselement eingesetzt werden, das auf die keilförmig geformte Bodenplatte 520 aufgesetzt wird. In dieser bevorzugten Variante ziehen sich Bodenplatte und Befestigungselement gegenseitig fest und bilden einen Formschluss.

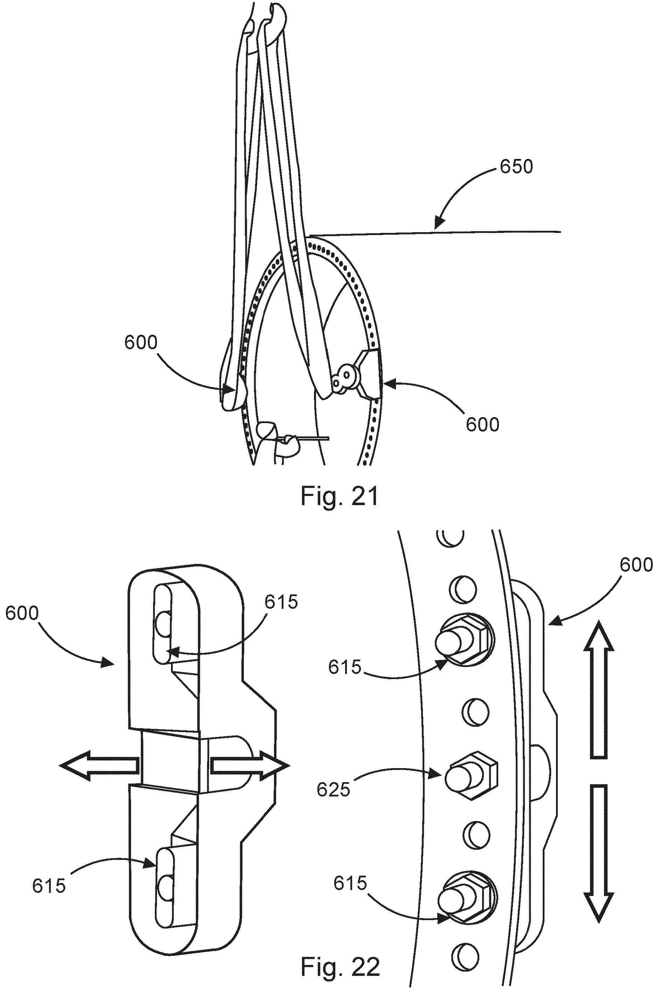

Fig. 21 zeigt zwei Hebemittel 600 befestigt an einem Turmsegment 650 einer Windenergieanlage. Durch jedes der Hebemittel 600 wird ein Seil geführt, an denen ein Kran das Turmsegment 650 anheben kann.

Dabei treten Belastungen längs und quer auf das Hebemittel 600 auf. Diese Belastungsrichtungen sind in Fig. 22 durch Pfeile angedeutet. Dadurch, dass die Schlitze im ersten und zweiten Befestigungsabschnitt 615, 625 etwa rechtwinklig zueinander ausgerichtet sind, wird ein horizontales und/oder vertikales Verschieben der Schraubverbindungen in den Schlitzen vermieden.

Wie in Fig. 21 zu sehen ist, wirkt eine Komponente der Kraft durch die Anordnung der Hebemittel am Turmsegment in Richtung Querschnittsmitte des Turmsegments.

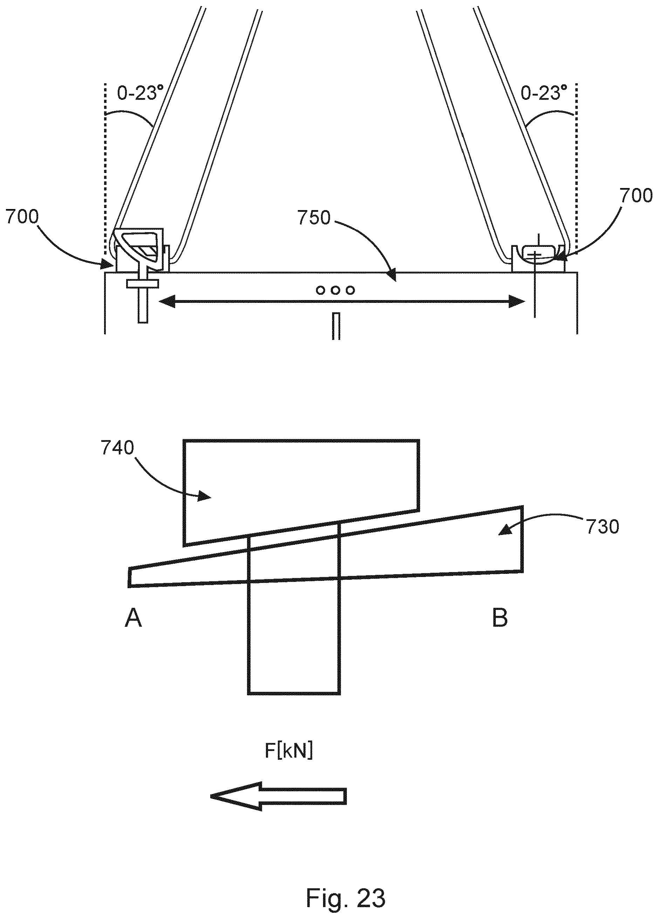

In Fig. 23 ist dies noch einmal schematisch veranschaulicht. In der oberen Abbildung sind zwei Hebemittel 700 an einem Turmsegment einer Windenergieanlage 750 befestigt. Durch die Hebemittel sind Seile geführt, so dass ein Kran das Turmsegment 750 an den Seilen anheben kann.

Eine Komponente der Kraft wirkt daher in Richtung Querschnittsmitte des Turmsegments 750. Für das rechte Hebemittel 700 ist die horizontale Kraftkomponente schematisch als Kraftpfeil unten in Figur 13 dargestellt.

Das rechte Hebemittel 700 weist dann eine Bodenplatte 730 und ein Befestigungselement 740 auf, die schematisch in Fig. 13 dargestellt sind. Das Befestigungselement 740 ist keilförmig ausgebildet. Die Bodenplatte 730 weist eine Aussparung auf, so dass sich ebenfalls eine keilförmige Fläche bildet, auf der das keilförmige Befestigungselement 740 aufliegt. Die Belastung wirkt auf das Hebemittel 700, an dem die Bodenplatte 730 ohne viel Spiel befestigt ist. Hebemittel 700 und Bodenplatte 730 werden dadurch gegen das keilförmig geformte Befestigungselement 740 gepresst. Dadurch erhöht sich der Anpressdruck und das Hebemittel zieht sich unter Belastung selbst fest. Bei der Montage ist somit ein geringes Anziehmoment notwendig.

Gemäß einem Aspekt der Erfindung kann ein Hebemittel zum Heben einer Komponente einer Windenergieanlage vorgesehen sein. Das Hebemittel weist einen Hauptkörper mit einem ersten Befestigungsabschnitt auf. Der Befestigungsabschnitt weist ein Langloch auf. Weiterhin umfasst das Hebemittel eine Bodenplatte mit einem zweiten Befestigungsabschnitt z. B. in Form einer Durchgangsbohrung für eine Befestigungsschraube. Der Hauptkörper weist einen Anhebebereich auf. Der erste und zweite Befestigungsabschnitt sind zum Verbinden des Hebemittels mit der Komponente der Windenergieanlage vorgesehen. Der zweite Befestigungsabschnitt umfasst ein keilförmiges Befestigungselement.

Der Anhebebereich im Hauptkörper ist zum Beispiel eine Öffnung, also ein Loch im Hauptkörper oder eine Öse. Der Anhebebereich kann als eine Ausnehmung ausgestaltet sein. Durch den Anhebebereich kann ein Seil geführt werden, über das ein Kran das Hebemittel anheben kann.

Über den ersten und zweiten Befestigungsabschnitt wird das Hebemittel an der anzuhebenden Komponente angebracht. Dazu können Schrauben durch ein Loch oder einen Schlitz im Befestigungsabschnitt geführt werden und das Hebemittel mit der Komponente verschrauben.

Das keilförmige Befestigungselement kann im montierten Zustand des Hebemittels auf der Bodenplatte aufliegen. Im zweiten Befestigungsabschnitt wird das Hebemittel über das keilförmige Befestigungselement an der Komponente angebracht. Das kann zum Beispiel dadurch erreicht werden, dass eine Schraube durch das Befestigungselement, den zweiten Befestigungsabschnitt in der Bodenplatte und die Komponente der Windenergieanlage geführt wird und dann mit einer Mutter fixiert wird. Ebenso ist es möglich, dass das keilförmige Befestigungselement selbst bereits der Kopf einer Schraube ist, die durch den zweiten Befestigungsabschnitt in der Bodenplatte und die Komponente der Windenergieanlage geführt und mit einer Mutter fixiert wird.

Der Vorteil der Erfindung ist, dass sich das Hebemittel durch das keilförmige Befestigungselement unter Beanspruchung selbst fester zieht. Die beim Anheben der Komponente auf das Hebemittel wirkende Kraft drückt den Keil in Richtung des schmaleren Endes. Schraube und Mutter werden durch den Keil somit auseinandergedrückt und ziehen sich fester zusammen.

Das Hebemittel lässt sich dadurch mit geringerem Drehmoment an der Komponente der Windenergieanlage befestigen und erlaubt dennoch eine sichere Verbindung.

Nach einem weiteren Aspekt ist die Komponente der Windenergieanlage ein Turmsegment und/oder ein Rotorblatt und/oder eine Rotornabe und/oder eine andere Komponente der Windenergieanlage.

Das Hebemittel wird dann an dem Turmsegment und/oder dem Rotorblatt angebracht, um es anzuheben oder zu transportieren. Das Turmsegment und/oder das Rotorblatt weisen dazu bereits Bohrlöcher über einen Umfang eines Querschnitts verteilt auf. Mit Schrauben oder Bolzen wird das Hebemittel an dem ersten und zweiten Befestigungsbereich mit den Löchern im Turmsegment und/oder Rotorblatt verschraubt.

Nach einem weiteren Aspekt ist im befestigten Zustand des Hebemittels an der Komponente der Windenergieanlage das keilförmige Befestigungselement so ausgerichtet ist, dass es sich entgegen einer Richtung einer Zugbelastung verjüngt.

Vorzugsweise werden beim Anheben der Komponente zwei Hebemittel jeweils an einer Seite der Komponente angebracht. Ein Seil wird durch beide Hebemittel geführt und durch einen Kran angehoben. Eine Kraft wirkt dann also entlang des Seils. Dabei wirkt die Kraft also anteilig in Richtung Mitte der Komponente.

Das keilförmige Befestigungselement ist in die entgegengesetzte Richtung verjüngt angeordnet. Die Belastung greift am Hebemittel an, wodurch das Hebemittel in Richtung der Belastung gezogen wird. Das dazu entgegengerichtet angeordnete keilförmige Befestigungselement wird dadurch an die Bodenplatte gepresst. Dabei drückt das keilförmige Befestigungselement die Schraube und Mutter auseinander, über die das Hebemittel an der Komponente der Windenergieanlage angebracht ist. Dadurch zieht sich das Hebemittel selbst fester. Bei der Montage ist es somit möglich, die Schrauben zum Befestigen mit reduziertem Drehmoment, kleiner 1700 Nm, anzuziehen.

Nach einem weiteren Aspekt ist die Bodenplatte mit dem zweiten Befestigungsabschnitt in der Mitte einer Grundfläche des Hebemittels angeordnet.

Durch die Befestigung des Hebemittels an einem Punkt in der Mitte wird vorteilhaft erreicht, dass Scherkräfte während des Aufrichtens der Komponente der Windenergieanlage aufgefangen werden können.

Nach einem weiteren Aspekt weist der erste und zweite Befestigungsabschnitt jeweils einen Schlitz auf, und der Schlitz des ersten Befestigungsabschnitts ist etwa im rechten Winkel zum Schlitz des zweiten Befestigungsabschnitts ausgerichtet.

Durch die Schlitze wird jeweils die Schraube geführt, um das Hebemittel mit der Komponente zu verbinden.

Der Vorteil der Schlitze liegt darin, dass die Schrauben ein gewisses Spiel haben. So wird erreicht, dass das Hebemittel an verschiedenen Komponenten befestigt werden kann. Die Komponente der Windenergieanlage, an der das Hebemittel befestigt wird, weist über den Umfang verteilt Löcher in einem gewissen Abstand auf. Im Hebemittel kann die Schraube nun im Schlitz so platziert werden, dass sie sich dem Abstand in der Komponente anpasst.

Problematisch ist dabei, dass beim Anheben der Komponente aufgrund der hohen auftretenden Kräfte die Schraube im Schlitz verrutschen könnte.

Um das zu vermeiden sind die Schlitze des ersten und zweiten Befestigungsabschnitts im rechten Winkel zueinander angeordnet. Auch ein leicht abweichender Winkel wäre jedoch geeignet.

Wirkt die Kraft entlang des Schlitzes des ersten Befestigungsabschnitts, so sperrt der dazu rechtwinklig angeordnete Schlitz im zweiten Befestigungsabschnitt die Bewegung entlang dieser Richtung. Umgekehrt, bei einer Kraft entlang des Schlitzes des zweiten Befestigungsabschnitts, verhält es sich genauso.

Horizontales und/oder vertikales Verschieben des Hebemittels beim Anheben der Komponente wird somit verhindert.

Nach einem weiteren Aspekt ist die Bodenplatte auswechselbar. Die Bodenplatte weist eine keilförmige und/oder trapezförmige Form auf, wobei durch die keilförmige und/oder trapezförmige Form ein Formschluss mit dem Hauptkörper und/oder dem keilförmigen Befestigungsmittel des zweiten Befestigungsabschnitts erreicht wird.

Die Bodenplatte kann dann z.B. mit vier Schrauben an der zur Komponente gerichteten Unterseite des Hebemittels angeschraubt werden.

Die Bodenplatte kann dabei vorzugsweise mittig am Hauptkörper des Hebemittels angebracht sein. Es kann z.B. so angeordnet sein, dass sich über der Bodenplatte der Anhebebereich befindet. Das hat dann zusätzlich den Vorteil, dass das keilförmige Befestigungselement und/oder eine Schraube zur Befestigung erst durch den zweiten Befestigungsabschnitt in der Bodenplatte geführt werden kann, bevor die Bodenplatte am Hauptkörper verbunden wird. Das erleichtert das Anbringen und erlaubt zudem das Verwenden von längeren Schrauben, die andernfalls durch eine Höhe der Öffnung des Anhebebereichs begrenzt wären.

Die Bodenplatte kann ebenfalls in ihrer Dicke bzw. Höhe wenigstens abschnittsweise keilförmig geformt sein. Sie kann dazu beispielsweise eine Aussparung aufweisen, wobei die Aussparung keilförmig geformt ist. Sie kann somit das Gegenstück zum keilförmigen Befestigungselement bilden. Dort wo sich das keilförmige Befestigungselement verjüngt, kann die Bodenplatte dicker werden und anders herum.

Vorteilhaft wird dadurch erreicht, dass der Anpressdruck unter Belastung noch weiter erhöht wird. Zudem wird erreicht, dass der Schraubenkopf nicht auf einer Schräge aufliegt. Durch das Gegenwirken der beiden keilförmig geformten Teile liegt der Schraubenkopf selbst wieder auf einer planen Ebene. Eine einseitige Belastung auf den Schraubenkopf und die Schraube wird vermieden.

Alternativ oder ergänzend kann die Bodenplatte auch so keilförmig bzw. trapezförmig geformt sein, dass sich der Formschluss mit dem Hauptkörper ergibt.

Die Bodenplatte kann dann in der Fläche nicht rechtwinklig sondern trapezförmig sein. Der Hauptkörper kann dazu eine im gleichen Maße trapezförmig geformte Aussparung aufweisen. In diese Aussparung kann die Bodenplatte eingesetzt werden. Die keilförmig bzw. trapezförmig geformte Fläche kann sich in Richtung einer angreifenden Kraft verjüngen. Durch die Kraft wird die Bodenplatte in die Aussparung im Hauptkörper gepresst und ein Formschluss erreicht.

Nach einem weiteren Aspekt weist der erste Befestigungsabschnitt wenigstens zwei Schlitze auf und die wenigstens zwei Schlitze sind zueinander nicht parallel ausgerichtet.

Die Schlitze des ersten Befestigungsabschnitts liegen jeweils an gegenüberliegenden Enden des Hauptkörpers. Zwischen den Schlitzen des ersten Befestigungsabschnitts befindet sich mittig die Bodenplatte mit dem zweiten Befestigungsabschnitt.

Durch die zwei Schlitze wird vorteilhaft eine bessere Kraftverteilung auf das Hebemittel erreicht.

Weiter vorteilhaft lässt sich das Hebemittel durch die leicht versetzten Schlitze besser an Komponenten mit unterschiedlichen Durchmessern anbringen. Je nach Durchmesser der Komponenten der Windenergieanlage wird die Schraube im Schlitz leicht verschoben.

### Bezugszeichenliste

- 100: Windenergieanlage
- 102: Turm
- 102a: Turmsegmente
- 102b: Turmflansch
- 104: Gondel
- 106: Rotor
- 108: Rotorblätter
- 108b: Rotorblattwurzeln
- 110: Spinner
- 120: Befestigungsbereich
- 130: Anhebebereich
- 200: Hebemittel
- 210: Hauptkörper
- 211: Ausnehmung
- 215: Befestigungsabschnitt
- 216: Schrauben
- 220: Bodenplatte
- 225: Befestigungsbereich
- 230: Anhebebereich
- 240: Befestigungselement
- 241: oberes keilförmiges Ende
- 242: zweites Ende
- 243: Schraube
- 300: Hebemittel
- 310: Hauptkörper
- 315: Befestigungsbereich
- 320: Bodenplatte
- 325: Befestigungsbereich
- 340: Befestigungselement
- 400: Hebemittel
- 410: Hauptkörper
- 415: Befestigungsabschnitt
- 415a: Schlitze
- 420: Bodenplatte
- 425: Befestigungsabschnitt
- 425a: Schlitz
- 430: Anhebebereich
- 440: Befestigungselement
- 500: Hebemittel
- 510: Hauptkörper
- 515: Befestigungsabschnitt
- 515a: Schlitze
- 520: Bodenplatte
- 530: Anhebebereich
- 600: Hebemittel
- 615: Befestigungsabschnitt
- 625: Befestigungsabschnitt
- 650: Turmsegment
- 700: Hebemittel
- 730: Bodenplatte
- 740: Befestigungselement
- 750: Windenergieanlage
- 800: Hebemittel
- 800a: Längsrichtung
- 810: Hauptkörper
- 811: erstes Ende
- 812: zweites Ende
- 813: Abschnitt
- 815: Befestigungselement
- 816: Langlöcher
- 817: Boden
- 820: Bodenplatteneinheit
- 821: Bodenplatte
- 821a: Löcher
- 822: Halter
- 822b: Bohrungen
- 822c: Bohrungen
- 823: Gewindeschrauben/Bolzen/Stangen
- 824: Schrauben
- 825: Bohrung
- 830: Anhebebereich
- 831: Hülse
- 831a: erstes Ende
- 831b: zweites Ende
- 831c: mittlerer Abschnitt
- 850: Befestigungseinheit
- 860: Schrauben
- 861: erstes Ende
- 862: zweites Ende
- 863: Unterlegscheibe
- 870: Schraube/Zapfen
- 910: Rundschlingen
- 920: Kranhaken

## Patentansprüche

1. Windenergieanlagen-Komponenten-Hebemittel (800) zum Anheben einer Komponente (102b) einer Windenergieanlage (100), mit
einem Hauptkörper (810) mit einem ersten und zweiten Ende (811, 812) sowie jeweils einem ersten Befestigungsabschnitt (815) zur Aufnahme von Schrauben im Bereich des ersten und zweiten Endes (811, 812), wobei der erste Befestigungsabschnitt (815) ein Langloch (816) entlang einer Längsrichtung (800a) des Hauptkörpers (810) aufweist, und
einer Bodenplatteneinheit (820), welche eine Bodenplatte (820) mit einer Bohrung (825) zur Aufnahme mindestens einer Stange, Schraube oder eines Bolzens (870) aufweist, wobei die Bohrung (825) quer zur Längsrichtung (800a) bewegbar ist,
**dadurch gekennzeichnet, dass**
die Bodenplatteneinheit (820) zwei Halter (822) aufweist, wobei die Bodenplatte (820) mittels der Halter (822) an dem Hauptkörper (810) befestigbar ist,
wobei die Bodenplatte (820) mittels Stangen, Schrauben oder Gewindestangen (823) zwischen den beiden Haltern (822) bewegbar ist.

2. Windenergieanlagen-Komponenten-Hebemittel (800) nach Anspruch 1, ferner mit
einem Anhebebereich (830) zwischen dem ersten und zweiten Ende (811, 812) des Hauptkörpers,
wobei in oder an dem Anhebebereich (830) eine Hülse (831) vorgesehen ist, welche zur Aufnahme eines Seils oder einer Rundschlinge zum Anheben des Hebemittels (800) vorgesehen ist.

3. Windenergieanlagen-Komponenten-Hebemittel (800) nach Anspruch 1 oder 2, wobei die Hülse (831) zweiteilig ausgestaltet ist und jeweils ein erstes und zweites Ende (831a, 831b) sowie einen mittleren Abschnitt (831c) aufweist, wobei der mittlere Abschnitt (831c) zylinderförmig oder halbzylinderförmig ausgestaltet ist.

4. Windenergieanlagen-Komponenten-Hebemittel (400, 500, 600, 700) zum Heben einer Komponente einer Windenergieanlage nach einem der Ansprüche 1 bis 3, mit
- einem Hauptkörper (410, 510, 610, 710) mit einem ersten Befestigungsabschnitt (415, 515, 615, 715), und
- einer Bodenplatte (420, 520, 620, 720) mit einem zweiten Befestigungsabschnitt (425, 525, 625, 725),
wobei der Hauptkörper (410, 510, 610, 710) einen Anhebebereich (430, 530, 630, 730) aufweist,
wobei der erste und zweite Befestigungsabschnitt (415, 515, 615, 715; 425, 525, 625, 725) zum Verbinden des Hebemittels (400, 500, 600, 700) mit der Komponente der Windenergieanlage eingerichtet sind, und
wobei der zweite Befestigungsabschnitt ein keilförmiges Befestigungselement umfasst.

5. Hebemittel nach Anspruch 4, wobei die Komponente der Windenergieanlage (100) ein Turmsegment (102a) und/oder ein Rotorblatt (108) der Windenergieanlage (100) ist.

6. Hebemittel nach Anspruch 4 oder 5, wobei im befestigten Zustand des Hebemittels an der Komponente der Windenergieanlage (100) das keilförmige Befestigungselement (240, 340) so ausgerichtet ist, dass es sich entgegen einer Richtung einer Zugbelastung verjüngt.

7. Hebemittel nach einem der Ansprüche 4 bis 6, wobei die Bodenplatte mit dem zweiten Befestigungsabschnitt in der Mitte einer Grundfläche des Hebemittels (400, 500, 600, 700) angeordnet ist.

8. Hebemittel nach einem der Ansprüche 4 bis 7, wobei der erste und zweite Befestigungsabschnitt (415, 515, 615, 715; 425, 525, 625, 725) jeweils einen Schlitz (415a, 515a, 615a) aufweisen, und
- der Schlitz (415a, 515a, 615a) des ersten Befestigungsabschnitts (415, 515, 615, 715) etwa im rechten Winkel zum Schlitz des zweiten Befestigungsabschnitts (425, 525, 625) ausgerichtet ist.

9. Hebemittel nach einem der Ansprüche 4 bis 8, wobei die Bodenplatte auswechselbar ist, und
- die Bodenplatte (420, 520, 620, 720) eine keilförmige und/oder trapezförmige Form aufweist, wobei durch die keilförmige und/oder trapezförmige Form ein Formschluss mit dem Hauptkörper und/oder dem keilförmigen Befestigungsmittel des zweiten Befestigungsabschnitts erreicht wird.

10. Hebemittel nach einem der Ansprüche 4 bis 9, wobei der erste Befestigungsabschnitt (415, 515, 615) wenigstens zwei Schlitze (415a, 515a, 615a) aufweist und die wenigstens zwei Schlitze zueinander nicht parallel ausgerichtet sind.

11. Verfahren zum Anheben einer Windenergieanlagen-Komponente, mit den Schritten:
Befestigen eines Windenergieanlagen-Komponenten-Hebemittels (800) nach einem der Ansprüche 1 bis 9 an einer Windenergieanlagen-Komponente, und
Anheben der Windenergieanlagen-Komponenten mittels des Windenergieanlagen-Komponenten-Hebemittels (800).

## Claims

1. Wind turbine component lifting means (800) for lifting a component (102b) of a wind turbine (100), comprising
a main body (810) with a first and second end (811, 812) as well as a respective first fastening section (815) for accommodating screws in the region of the first and second end (811, 812), wherein the first fastening section (815) has an oblong hole (816) along a longitudinal direction (800a) of the main body (810), and
a floor plate unit (820), which has a floor plate (820) with a borehole (825) for accommodating at least one rod, screw or bolt (870), wherein the borehole (825) is movable transverse to the longitudinal direction (800a),
**characterised in that** the floor plate unit (820) has two brackets (822), wherein the floor plate (820) can be fastened to the main body (810) by means of the brackets (822),
wherein the floor plate (820) is movable between the two brackets (822) by means of rods, screws or threaded rods (823).

2. Wind turbine component lifting means (800) according to claim 1, further comprising
a lifting area (830) between the first and second end (811, 812) of the main body,
wherein a sleeve (831) is provided in or on the lifting area (830), which is provided for accommodating a rope or a round sling for lifting the lifting means (800).

3. Wind turbine component lifting means (800) according to claim 1 or 2, wherein the sleeve (831) is configured in two parts and has a respective first and second end (831a, 831b) as well as a middle section (831c), wherein the middle section (831c) is configured to be cylindrical or semi-cylindrical.

4. Wind turbine component lifting means (400, 500, 600, 700) for lifting a component of a wind turbine according to one of claims 1 to 3, comprising
- a main body (410, 510, 610, 710) with a first fastening section (415, 515, 615, 715), and
- a floor plate (420, 520, 620, 720) with a second fastening section (425, 525, 625, 725),
wherein the main body (410, 510, 610, 710) has a lifting area (430, 530, 630, 730),
wherein the first and second fastening section (415, 515, 615, 715; 425, 525, 625, 725) are configured to connect the lifting means (400, 500, 600, 700) to the component of the wind turbine, and
wherein the second fastening section comprises a wedge-shaped fastening element.

5. Lifting means according to claim 4, wherein the component of the wind turbine (100) is a tower segment (102a) and/or a rotor blade (108) of the wind turbine (100).

6. Lifting means according to claim 4 or 5, wherein, in the fastened state of the lifting means on the component of the wind turbine (100), the wedge-shaped fastening element (240, 340) is oriented such that it tapers opposite to a direction of a tensile load.

7. Lifting means according to one of claims 4 to 6, wherein the floor plate with the second fastening section is arranged in the middle of a base area of the lifting means (400, 500, 600, 700).

8. Lifting means according to one of claims 4 to 7, wherein the first and second fastening section (415, 515, 615, 715; 425, 525, 625, 725) each have a slit (415a, 515a, 615a), and
- the slit (415a, 515a, 615a) of the first fastening section (415, 515, 615, 715) is oriented approximately at a right angle to the slit of the second fastening section (425, 525, 625).

9. Lifting means according to one of claims 4 to 8, wherein the floor plate is exchangeable, and
- the floor plate (420, 520, 620, 720) has a wedge-shaped and/or trapezoidal form, wherein the wedge-shaped and/or trapezoidal form achieves a positive fit with the main body and/or the wedge-shaped fastening means of the second fastening section.

10. Lifting means according to one of claims 4 to 9, wherein the first fastening section (415, 515, 615) has at least two slits (415a, 515a, 615a), and the at least two slits are not oriented parallel to one another.

11. Method for lifting a wind turbine component, comprising the steps of: fastening a wind turbine component lifting means (800) according to one of claims 1 to 9 to a wind turbine component, and
lifting the wind turbine component by means of the wind turbine component lifting means (800).

## Revendications

1. Moyen de levage de composant d'éolienne (800) pour lever un composant (102b) d'une éolienne (100), avec
un corps principal (810) ayant une première et seconde extrémité (811, 812) ainsi que respectivement une première section de fixation (815) pour recevoir des vis dans la zone de la première et seconde extrémité (811, 812), dans lequel la première section de fixation (815) présente un trou oblong (816) le long d'une direction longitudinale (800a) du corps principal (810), et
une unité de plaque de fond (820), qui présente une plaque de fond (820) avec un alésage (825) pour recevoir au moins une tige, une vis ou un boulon (870), dans lequel l'alésage (825) est mobile transversalement à la direction longitudinale (800a),
**caractérisé en ce que**
l'unité de plaque de fond (820) présente deux supports (822), dans lequel la plaque de fond (820) peut être fixée au corps principal (810) à l'aide des supports (822),
dans lequel la plaque de fond (820) est mobile entre les deux supports (822) à l'aide de tiges, de vis ou de tiges filetées (823).

2. Moyen de levage de composant d'éolienne (800) selon la revendication 1, en outre avec
une zone de levage (830) entre la première et seconde extrémité (811, 812) du corps principal,
dans lequel un manchon (831), lequel est prévu pour recevoir un câble ou une élingue ronde pour lever le moyen de levage (800), est prévu dans ou sur la zone de levage (830).

3. Moyen de levage de composant d'éolienne (800) selon la revendication 1 ou 2, dans lequel le manchon (831) est conçu en deux parties et présente respectivement une première et seconde extrémité (831a, 831b) ainsi qu'une section centrale (831c), dans lequel la section centrale (831c) est conçue de manière cylindrique ou semi-cylindrique.

4. Moyen de levage de composant d'éolienne (400, 500, 600, 700) pour lever un composant d'une éolienne selon l'une quelconque des revendications 1 à 3, avec
- un corps principal (410, 510, 610, 710) ayant une première section de fixation (415, 515, 615, 715), et
- une plaque de fond (420, 520, 620, 720) ayant une seconde section de fixation (425, 525, 625, 725),
dans lequel le corps principal (410, 510, 610, 710) présente une zone de levage (430, 530, 630, 730),
dans lequel les première et seconde sections de fixation (415, 515, 615, 715 ; 425, 525, 625, 725) sont configurées pour relier le moyen de levage (400, 500, 600, 700) au composant de l'éolienne, et
dans lequel la seconde section de fixation comprend un élément de fixation cunéiforme.

5. Moyen de levage selon la revendication 4, dans lequel le composant de l'éolienne (100) est un segment de tour (102a) et/ou une pale de rotor (108) de l'éolienne (100).

6. Moyen de levage selon la revendication 4 ou 5, dans lequel, à l'état fixé du moyen de levage au composant de l'éolienne (100), l'élément de fixation cunéiforme (240, 340) est orienté de sorte qu'il s'effile dans une direction opposée à une charge de traction.

7. Moyen de levage selon l'une quelconque des revendications 4 à 6, dans lequel la plaque de fond ayant la seconde section de fixation est disposée au milieu d'une surface de base du moyen de levage (400, 500, 600, 700).

8. Moyen de levage selon l'une quelconque des revendications 4 à 7, dans lequel les première et seconde sections de fixation (415, 515, 615, 715 ; 425, 525, 625, 725) présentent respectivement une fente (415a, 515a, 615a), et
- la fente (415a, 515a, 615a) de la première section de fixation (415, 515, 615, 715) est orientée à peu près perpendiculairement à la fente de la seconde section de fixation (425, 525, 625).

9. Moyen de levage selon l'une quelconque des revendications 4 à 8, dans lequel la plaque de fond est interchangeable, et
- la plaque de fond (420, 520, 620, 720) présente une forme cunéiforme et/ou trapézoïdale, dans lequel une complémentarité de formes avec le corps principal et/ou le moyen de fixation cunéiforme de la seconde section de fixation est obtenue par la forme cunéiforme et/ou trapézoïdale.

10. Moyen de levage selon l'une quelconque des revendications 4 à 9, dans lequel la première section de fixation (415, 515, 615) présente au moins deux fentes (415a, 515a, 615a) et les au moins deux fentes ne sont pas orientées parallèlement l'une à l'autre.

11. Procédé de levage d'un composant d'éolienne, avec les étapes :
de fixation d'un moyen de levage de composant d'éolienne (800) selon l'une quelconque des revendications 1 à 9 à un composant d'éolienne, et
de levage des composants d'éolienne à l'aide du moyen de levage de composant d'éolienne (800).
